# FASCICULE DE BREVET EUROPEEN

(11) **EP 2 758 647 B1**
(45) Date de publication et mention de la délivrance du brevet: **09.09.2015**
(21) Numéro de dépôt: 12743752.3
(22) Date de dépôt: 02.07.2012
(51) Int. Cl.: F01P 3/20, B60K 6/20, B60K 6/48

(54) **REFROIDISSEMENT DE MOTEUR ELECTRIQUE PAR CALODUCS**
KÜHLUNG EINES ELEKTROMOTORS ÜBER WÄRMEROHRE
COOLING OF AN ELECTRIC MOTOR VIA HEAT PIPES

(30) Priorité: 13.09.2011 FR 1158128
(43) Date de publication de la demande: 30.07.2014
(73) Titulaire: Renault S.A.S., 92100 Boulogne-Billancourt (FR)
(72) Inventeur: RUBY, Stéphane, F-92500 Rueil-Malmaison (FR); LE LAGADEC, Jean-Pierre, F-92800 Puteaux (FR)
(86) Numéro de dépôt international: PCT/FR2012/051519
(87) Numéro de publication internationale: WO 2013/038078

(56) Documents cités:
- EP-A2- 0 827 853
- EP-A2- 2 233 340
- WO-A1-2010/087024
- FR-A1- 2 914 960
- US-A1- 2005 022 769
- US-A1- 2011 000 721

## Description

### Domaine technique de l'invention

La présente invention concerne un système de refroidissement d'un moteur d'un véhicule automobile équipé d'une motorisation hybride comportant un moteur électrique et un moteur à combustion interne.

L'invention concerne également les véhicules à motorisation hybride équipé d'un moteur électrique et un moteur à combustion interne et d'un système de refroidissement.

### Etat de la technique antérieure

Les véhicules automobiles à motorisation hybride équipés d'un système de motorisation électrique et d'un système de motorisation à combustion interne sont équipés de systèmes de refroidissement spécifiques à chaque motorisation car les différentes motorisations ne sont pas toujours sollicitées en même temps. Le système de motorisation électrique est généralement sollicité lors des phases de démarrage du véhicule et de roulage sur quelques kilomètres. Le moteur à combustion interne est en général lancé après cette phase de démarrage et de roulage sur quelques kilomètres en relai du moteur électrique. Cependant, en roulage, les deux motorisations peuvent être sollicitées au même moment par exemple lors d'une phase d'effort important.

Les demandes de brevet tels que DE 102009054873 ou WÖ2006010487 enseignent la réalisation d'un système de refroidissement de véhicule à motorisation hybride comportant un moteur à combustion interne et un moteur électrique, le système comportant deux circuits de refroidissement dont un est spécifique au moteur électrique,

La chaleur dégagée par le système de motorisation électrique est en général évacuée hors du véhicule.

Un inconvénient est donc une installation d'un circuit de refroidissement spécifique pour le système de motorisation électrique.

Un autre inconvénient est la dissipation d'une grande quantité de chaleur en pure perte sans pouvoir être utilisée ailleurs.

Un but de l'invention est de pallier ces inconvénients.

### Bref résumé de l'invention

L'invention a pour objet un système de refroidissement de système de motorisation électrique de véhicule automobile à motorisation hybride comportant un système de motorisation électrique et un système de motorisation à combustion interne, le système de motorisation à combustion interne (11) comportant un circuit de circulation fluide,
caractérisé en ce qu'il comprend un réservoir de stockage thermique relié au circuit de circulation fluide et au système de motorisation électrique par des caloducs.

Selon des caractéristiques particulières de l'invention :
- le circuit fluide comporte une portion de circuit de liquide de refroidissement vers le réservoir de stockage, et relié à un circuit de liquide de refroidissement du moteur thermique,
- le système comporte un moyen de circulation de liquide de refroidissement installé dans la portion du circuit de liquide de refroidissement,
- le circuit fluide comporte une portion de circuit d'huile de lubrification vers le réservoir de stockage, et relié à un circuit d'huile de lubrification du moteur thermique,
- le système comporte un moyen de circulation d'huile installé dans la portion du circuit de refroidissement et de lubrification d'huile,
- le moyen de circulation installé dans la portion de circuit de liquide de refroidissement comporte une pompe électrique et le moyen de circulation installé dans la portion de circuit d'huile de lubrification comporte une pompe électrique,
- le moyen de circulation installé dans la portion de circuit de liquide de refroidissement et le moyen de circulation installé dans la portion de circuit d'huile de lubrification sont pilotés par une unité électronique de contrôle en fonction des régimes du système de motorisation électrique et du système de motorisation à combustion interne et de la température du réservoir de stockage,
- le réservoir de stockage thermique comporte un circuit d'échange de liquide de refroidissement relié à la portion du circuit de liquide de refroidissement,
- le réservoir de stockage comporte un circuit d'échange d'huile relié au circuit de lubrification d'huile du moteur à combustion interne,
- le stator comprend des lumières longitudinales dont les axes sont parallèles à l'axe du stator, et en ce que les lumières sont destinées à accueillir une portion d'extrémité des caloducs,
- le stator est entouré par un élément comportant des lumières destinées à accueillir une portion d'extrémité des caloducs,
- le bloc de commande comporte des lumières destinées à accueillir une portion d'extrémité des caloducs,
- le réservoir thermique comporte des lumières destinées à accueillir une portion d'extrémité des caloducs,
- le réservoir de stockage et les circuits de liquide et d'huile comportent chacun au moins une sonde de température coopérant avec une unité de contrôle électronique.

D'autres aspects de l'invention vont être présentés dans la description suivante en regard des dessins annexés, donnée à titre d'exemple non limitatif dans le but de bien comprendre l'invention et comment elle peut être réalisée.

### Description des dessins

La figure 1 est une vue schématique de coupe de dessus d'un véhicule automobile équipé d'un moteur électrique et d'un moteur à combustion interne.
La figure 2 est une vue schématique de coupe transversale du moteur électrique.

### Description détaillée des figures

Dans les figures, les mêmes éléments représentés sont désignés par les mêmes références.

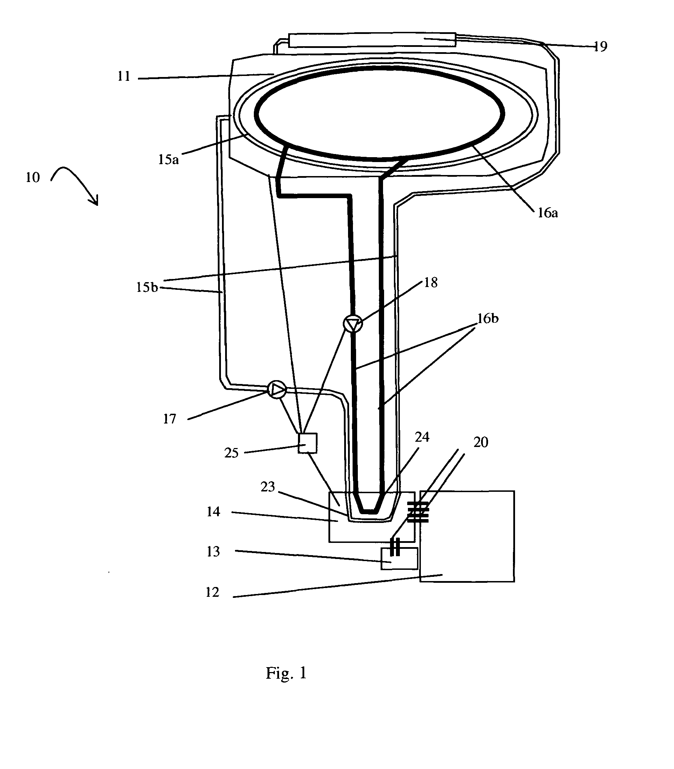

Dans la figure 1, un véhicule (non représenté) à motorisation hybride est équipé d'un système de motorisation électrique 12 installé à l'arrière du véhicule et d'un système de motorisation à combustion interne ou thermique 11 installé vers l'avant du véhicule. L'invention ne dépend pas des positionnements du système de motorisation à combustion interne et du système de motorisation électrique, qui servent uniquement à la description d'un exemple de mode réalisation.

Le système de motorisation à combustion interne 11 comprend un circuit fluide pour maintenir un bon fonctionnement des organes du système de motorisation thermique. Le circuit fluide comporte un circuit d'huile 16a et un circuit de liquide de refroidissement 15a. Le circuit d'huile est destiné à la lubrification et au refroidissement des organes du moteur thermique, par exemple les pistons dans une chambre à combustion ou un vilebrequin installé dans une chambre de bielles dans un carter cylindres du moteur. Le circuit de liquide de refroidissement 15a est destiné à refroidir des éléments de la structure du moteur thermique tels que le carter cylindres ou une culasse (non représentés) recouvrant le carter cylindres. Le circuit d'huile 16a échange de la chaleur avec le circuit de liquide de refroidissement 15a au niveau d'un échangeur (non représenté) huile/liquide de refroidissement. Le circuit de liquide de refroidissement 15a échange de la chaleur avec l'environnement extérieur au niveau d'un radiateur 19.

Le système de motorisation électrique comprend un moteur électrique 12, un bloc de commande 13 du moteur électrique et une batterie (non représentée). Le moteur électrique 12 comprend un stator 21 fixé sur un élément de caisse du véhicule (non représenté), qui comporte une chambre cylindrique autour d'un axe, un rotor 22 mobile à rotation dans la chambre cylindrique et un bloc de commande 13 du moteur électrique.

Le circuit de liquide de refroidissement 15a comporte une branche supplémentaire de dérivation 15b de circulation de liquide depuis le moteur à combustion interne à l'avant du véhicule vers le système de motorisation électrique à l'arrière du véhicule. Cette branche supplémentaire ou portion de circuit 15b de liquide de refroidissement rejoint ensuite le circuit de liquide de refroidissement 15a en un point plus en aval. Un moyen de circulation 17 est installé dans la portion de circuit 15b, ledit moyen est commandé par une unité de contrôle électronique 25. Le liquide de refroidissement est apte à circuler à l'avant du véhicule autour du moteur à combustion interne et également à circuler vers le système de motorisation électrique. Le moyen de circulation peut par exemple comporter un clapet associé à des moyens d'actionnement d'ouverture/fermeture du clapet.

Le circuit d'huile de lubrification 16a comporte une branche supplémentaire de dérivation de circulation d'huile depuis le moteur à combustion interne à l'avant du véhicule vers le système de motorisation électrique à l'arrière du véhicule. Cette branche supplémentaire ou portion de circuit d'huile 16b de lubrification rejoint ensuite le circuit d'huile en un point plus en aval du circuit d'huile. Un moyen de circulation 18 est installé dans ladite portion de circuit d'huile, ledit moyen est commandé également par l'unité de contrôle électronique 25. L'huile est apte à circuler dans le circuit de lubrification du moteur à combustion interne et également à circuler vers le système de motorisation électrique. Le moyen de circulation peut par exemple comporter un clapet associé avec des moyens d'actionnement d'ouverture/fermeture du clapet.

Un réservoir thermique 14 est installé sur un élément de caisse du véhicule, à l'arrière du véhicule et de manière préférentielle, accolé au moteur électrique 12. Ce réservoir thermique peut être par exemple un conteneur contenant un liquide ou une matière avec des propriétés thermiques de stockage de la chaleur. Le volume du réservoir peut être de quelques litres, par exemple de cinq à vingt litres.

L'intérieur du réservoir comporte un premier circuit d'échange de chaleur 23 relié à la portion de circuit de liquide de refroidissement 15b et un deuxième circuit d'échange 24 relié à la portion de circuit d'huile 16b, les deux circuits d'échange sont immergés dans le liquide ou la matière de stockage thermique. Dans le réservoir sont aménagées des lumières destinées à accueillir une portion d'extrémité de caloducs 20 de forme de tubes cylindriques de telle manière que cette portion d'extrémité soit en contact avec le liquide ou la matière de stockage thermique.

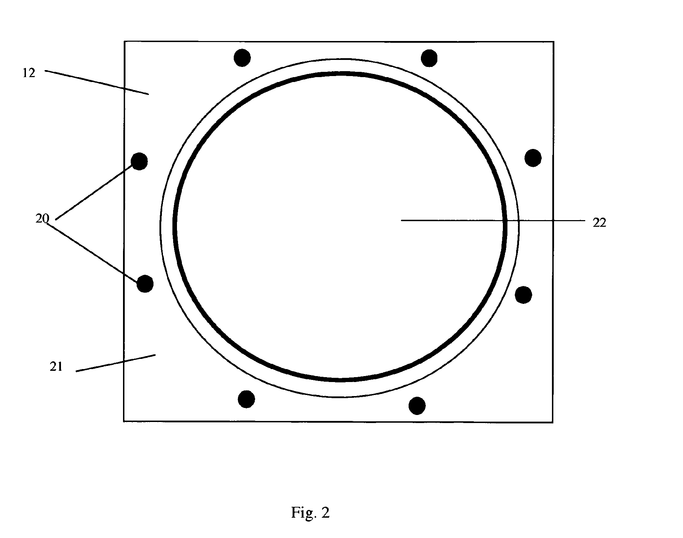

Selon un mode de réalisation, des lumières sont aménagées dans le stator destinées à accueillir une portion d'extrémité des caloducs. Sur les parois de ces lumières est étalée une pâte de contact destinée à assurer un contact thermique serré, tel que représenté dans la figure 2.

Une extrémité des caloducs 20 est introduite dans les lumières dans le réservoir de stockage thermique 14 et l'autre extrémité des caloducs dans les lumières dans le stator 21. Le réservoir 14 est placé de manière préférentielle proche du moteur électrique et du stator 21 de telle manière qu'une portion du caloduc non recouverte par le réservoir 14 et par le stator 21 soit réduite au maximum ou éventuellement recouverte de matière isolante thermiquement comme un revêtement de fibres.

Des caloducs 20 peuvent aussi être introduits dans des lumières formées dans le bloc de commande 13 du moteur électrique.

Des sondes de températures (non représentées) sont installées dans :
- le réservoir de stockage thermique 14,
- dans le circuit de liquide de refroidissement 15a,
- dans le circuit d'huile de lubrification 16a,
et coopèrent avec l'unité de contrôle électronique 25.

Le système de motorisation électrique 12 est sollicité principalement lors des phases de démarrage et de roulage sur des petites distances. Le fonctionnement du système de motorisation électrique est accompagné d'un grand dégagement de chaleur. Cette chaleur est transférée du point « chaud » représenté par le stator 21 et le bloc de commande 13 vers le point « froid » qui est le réservoir de stockage 14.

Le moteur thermique 11 est démarré mais non sollicité dans les premiers kilomètres. Les organes du moteur thermique sont encore « froids » et notamment l'huile de lubrification. L'unité de contrôle électronique 25 est agencée de façon à piloter un fonctionnement du moyen de circulation 18 et permettre une circulation d'huile vers le réservoir de stockage thermique circulant par la portion de circuit d'huile 16b.

L'huile entre ensuite dans le réservoir thermique 14 où elle se charge en chaleur dans le circuit d'échange 24 d'huile et dont elle ressort pour revenir vers le moteur à combustion interne. La chaleur échangée permet de faire monter plus rapidement en température l'huile de lubrification ce qui permet une montée en température des organes du moteur. L'huile devient également moins visqueuse, ce qui diminue les frottements entre les pièces lubrifiées et donc diminue la consommation d'énergie.

Lorsque la température de l'huile atteint un seuil de température de fonctionnement, le moyen de circulation du circuit d'huile 18 peut de nouveau être arrêté, empêchant la circulation d'huile dans la portion de circuit d'huile 16b.

Si la température dans le réservoir de stockage est inférieure à une température seuil, les deux moyens de circulation 17,18 sont arrêtés et aucune circulation de fluide ne peut être effectué vers les portions de circuit de liquide de refroidissement 15b et d'huile 16b. En conséquence, aucun échange de chaleur n'est réalisé entre le moteur thermique et le moteur électrique.

Si la température dans le réservoir de stockage 14 est supérieure à une valeur seuil, l'unité de contrôle commande le fonctionnement du moyen de circulation 17 de la portion du circuit 15b de liquide de refroidissement. Le liquide de refroidissement peut alors circuler vers l'arrière du véhicule vers le réservoir de stockage 14. Le liquide de refroidissement passe par la portion de circuit 15b de liquide de refroidissement, pénètre dans le réservoir de stockage 14 , circule dans le circuit d'échange de refroidissement 23 où il se charge en chaleur, et ressort du réservoir pour revenir vers le moteur à combustion interne de manière préférentielle en amont du radiateur d'échange 19.

Le système permet donc un refroidissement du système de motorisation électrique 12 par le circuit de refroidissement 15a du moteur thermique 11 et une utilisation de la chaleur dégagée lors de la sollicitation du système de motorisation électrique pour réduire la consommation d'énergie.

L'invention n'est pas limitée aux modes de réalisation présentés ci-dessus. D'autres modes de réalisation peuvent être suggérés dans l'esprit de l'homme du métier, par exemple par l'installation de pompes à la place des clapets pour améliorer la circulation des fluides dans les portions de circuits ou par l'entourage des points chauds (stator, bloc de commande) par un élément comportant des lumières pour accueillir une portion d'extrémité des caloducs.

Dans le cas où les moyens de circulation comprennent des pompes de circulation de préférence électriques, le refroidissement du réservoir de stockage 14 et donc du système de motorisation électrique peut être effectué par le circuit de refroidissement 15a et aussi par le circuit de lubrification d'huile 16a du moteur thermique, même lorsque le moteur thermique est arrêté, ce qui permet une économie d'énergie supplémentaire.

La forme des caloducs peut également varier pour améliorer les surfaces d'échange avec le moteur électrique et avec le réservoir de stockage thermique.

## Revendications

1. Système (10) de refroidissement de système de motorisation électrique de véhicule automobile à motorisation hybride comportant un système de motorisation électrique (12,13) et un système de motorisation thermique (11), le système de motorisation thermique (11) comportant au moins un circuit de circulation fluide,
**caractérisé en ce que** le système de refroidissement comporte un réservoir de stockage thermique (14), et **en ce que** ledit réservoir est relié au circuit de circulation fluide, et au système de motorisation électrique par des caloducs (20).

2. Système de refroidissement selon la revendication 1, **caractérisé en ce que** le circuit de circulation fluide comporte une portion de circuit de liquide de refroidissement (15b) relié à un circuit de refroidissement (15a) du système de motorisation thermique.

3. Système de refroidissement selon la revendication 2, **caractérisé en ce qu'**il comporte un moyen de circulation de liquide (17) installé dans la portion du circuit de liquide de refroidissement (15b).

4. Système de refroidissement selon l'une quelconque des revendications 1 à 3, **caractérisé en ce que** le circuit de circulation fluide comporte une portion de circuit d'huile (16b) de lubrification relié à un circuit d'huile (16a) de lubrification du système de motorisation thermique.

5. Système de refroidissement selon la revendication 4, **caractérisé en ce qu'**il comporte un moyen de circulation d'huile (18) installé dans la portion du circuit de refroidissement et de lubrification d'huile (16b).

6. Système de refroidissement selon les revendications 3 et 5, **caractérisé en ce que** le moyen de circulation (17) installé dans la portion de circuit de liquide de refroidissement (15b) et le moyen de circulation (18) installé dans la portion de circuit d'huile de lubrification (16b) sont pilotés par une unité électronique de contrôle (25) en fonction soit des régimes du système de motorisation électrique (12,13) et du système de motorisation thermique (11), soit de la température du réservoir de stockage (14).

7. Système de refroidissement selon la revendication 6, **caractérisé en ce que** le moyen de circulation (17) installé dans la portion de circuit de liquide de refroidissement (15b) comporte une pompe électrique et **en ce que** le moyen de circulation (18) installé dans la portion de circuit d'huile de lubrification (16b) comporte une pompe électrique.

8. Système de refroidissement selon l'une quelconque des revendications 2 à 7, **caractérisé en ce que** le réservoir de stockage thermique (14) comporte un circuit d'échange (23) de liquide de refroidissement relié à la portion du circuit de liquide de refroidissement (15b).

9. Système de refroidissement selon l'une quelconque des revendications 4 à 8, **caractérisé en ce que** le réservoir de stockage thermique (14) comporte un circuit d'échange d'huile (24) relié à la portion du circuit de lubrification d'huile (16b).

10. Système de refroidissement selon l'une quelconque des revendications 1 à 9, **caractérisé en ce que** le système de motorisation électrique comprend un stator (21) comportant des lumières destinées à accueillir une portion d'extrémité des caloducs (20).

11. Système de refroidissement selon l'une quelconque des revendications 1 à 10, **caractérisé en ce que** le système de motorisation électrique comprend un bloc de commande (13) comportant des lumières destinées à accueillir une portion d'extrémité des caloducs (20).

12. Système de refroidissement selon l'une quelconque des revendications 1 à 11, **caractérisé en ce que** le réservoir (14) de stockage thermique comporte des lumières destinées à accueillir une portion d'extrémité des caloducs.

13. Système de refroidissement selon l'une quelconque des revendications 1 à 12, **caractérisé en ce que** le réservoir (14) et les circuits de liquide (15a) et d'huile (16a) comportent chacun une sonde de température coopérant avec l'unité électronique de contrôle (25).

## Patentansprüche

1. Kühlsystem (10) eines Elektroantriebssystems eines Kraftfahrzeugs mit Hybridantrieb, der ein Elektroantriebssystem (12, 13) und ein Verbrennungsantriebssystem (11) aufweist, wobei das Verbrennungsantriebssystem (11) mindestens einen Fluidzirkulationskreis aufweist,
**dadurch gekennzeichnet, dass** das Kühlsystem einen Wärmespeicherbehälter (14) aufweist, und dass der Behälter mit dem Fluidzirkulationskreis und mit dem Elektroantriebssystem durch Wärmeleitrohre (20) verbunden ist.

2. Kühlsystem nach Anspruch 1, **dadurch gekennzeichnet, dass** der Fluidzirkulationskreis einen Kühlflüssigkeitskreisabschnitt (15b) aufweist, der mit einem Kühlkreis (15a) des Verbrennungsantriebssystems verbunden ist.

3. Kühlsystem nach Anspruch 2, **dadurch gekennzeichnet, dass** es eine Flüssigkeitszirkulationseinrichtung (17) aufweist, die in den Abschnitt des Kühlflüssigkeitskreises (15b) eingebaut ist.

4. Kühlsystem nach einem der Ansprüche 1 bis 3, **dadurch gekennzeichnet, dass** der Fluidzirkulationskreis einen Schmierölkreisabschnitt (16b) aufweist, der mit einem Schmierölkreis (16a) des Verbrennungsantriebssystems verbunden ist.

5. Kühlsystem nach Anspruch 4, **dadurch gekennzeichnet, dass** es eine Ölzirkulationseinrichtung (18) aufweist, die in den Abschnitt des Kühl- und Ölschmierkreises (16b) eingebaut ist.

6. Kühlsystem nach den Ansprüchen 3 und 5, **dadurch gekennzeichnet, dass** die in den Kühlflüssigkeitskreisabschnitt (15b) eingebaute Zirkulationseinrichtung (17) und die in den Schmierölkreisabschnitt (16b) eingebaute Zirkulationseinrichtung (18) von einer elektronischen Steuereinheit (25) abhängig von den Betriebsarten des Elektroantriebssystems (12, 13) und des Verbrennungsantriebssystems (11) oder von der Temperatur des Speicherbehälters (14) gesteuert werden.

7. Kühlsystem nach Anspruch 6, **dadurch gekennzeichnet, dass** die in den Kühlflüssigkeitskreisabschnitt (15b) eingebaute Zirkulationseinrichtung (17) eine Elektropumpe aufweist, und dass die in den Schmierölkreisabschnitt (16b) eingebaute Zirkulationseinrichtung (18) eine Elektropumpe aufweist.

8. Kühlsystem nach einem der Ansprüche 2 bis 7, **dadurch gekennzeichnet, dass** der Wärmespeicherbehälter (14) einen Kühlflüssigkeit-Austauschkreis (23) aufweist, der mit dem Abschnitt des Kühlflüssigkeitskreises (15b) verbunden ist.

9. Kühlsystem nach einem der Ansprüche 4 bis 8, **dadurch gekennzeichnet, dass** der Wärmespeicherbehälter (14) einen Ölaustauschkreis (24) aufweist, der mit dem Abschnitt des Ölschmierkreises (16b) verbunden ist.

10. Kühlsystem nach einem der Ansprüche 1 bis 9, **dadurch gekennzeichnet, dass** das Elektroantriebssystem einen Stator (21) mit Öffnungen enthält, die dazu bestimmt sind, einen Endabschnitt der Wärmeleitrohre (20) aufzunehmen.

11. Kühlsystem nach einem der Ansprüche 1 bis 10, **dadurch gekennzeichnet, dass** das Elektroantriebssystem einen Steuerblock (13) mit Öffnungen enthält, die dazu bestimmt sind, einen Endabschnitt der Wärmeleitrohre (20) aufzunehmen.

12. Kühlsystem nach einem der Ansprüche 1 bis 11, **dadurch gekennzeichnet, dass** der Speicherbehälter (14) Öffnungen aufweist, die dazu bestimmt sind, einen Endabschnitt der Wärmeleitrohre aufzunehmen.

13. Kühlsystem nach einem der Ansprüche 1 bis 12, **dadurch gekennzeichnet, dass** der Behälter (14) und die Flüssigkeits- (15a) und Ölkreise (16a) je einen Temperaturfühler aufweisen, der mit der elektronischen Steuereinheit (25) zusammenwirkt.

## Claims

1. System (10) for cooling an electric drive system of an automotive vehicle with a hybrid drive train comprising an electric drive system (12, 13) and a thermal drive system (11), the thermal drive system (11) comprising at least one fluid circulation circuit, **characterized in that** the system for cooling comprises a heat storage tank (14) and **in that** said tank is connected to the fluid circulation circuit and to the electric drive system via heat pipes (20).

2. System for cooling according to Claim 1, **characterized in that** the fluid circulation circuit comprises a coolant circuit portion (15b) connected to a cooling circuit (15a) of the thermal drive system.

3. System for cooling according to Claim 2, **characterized in that** it comprises a liquid circulating means (17) installed in the coolant circuit portion (15b).

4. System for cooling according to any one of Claims 1 to 3, **characterized in that** the fluid circulation circuit comprises a lubricating oil circuit portion (16b) connected to a lubricating oil circuit (16a) of the thermal drive system.

5. System for cooling according to Claim 4, **characterized in that** it comprises an oil circulating means (18) installed in the cooling circuit portion and the lubricating oil circuit portion (16b).

6. System for cooling according to Claims 3 and 5, **characterized in that** the circulating means (17) installed in the coolant circuit portion (15b) and the circulating means (18) installed in the lubricating oil circuit portion (16b) are controlled by an electronic control unit (25) as a function either of the operating conditions of the electric drive system (12, 13) and of the thermal drive system (11), or the temperature of the storage tank (14).

7. System for cooling according to Claim 6, **characterized in that** the circulating means (17) installed in the coolant circuit portion (15b) comprises an electric pump and **in that** the circulating means (18) installed in the lubricating oil circuit portion (16b) comprises an electric pump.

8. System for cooling according to any one of Claims 2 to 7, **characterized in that** the heat storage tank (14) comprises a coolant exchange circuit (23) connected to the coolant circuit portion (15b).

9. System for cooling according to any one of Claims 4 to 8, **characterized in that** the heat storage tank (14) comprises an oil exchange circuit (24) connected to the oil lubricating circuit portion (16b).

10. System for cooling according to any one of Claims 1 to 9, **characterized in that** the electric drive system comprises a stator (21) comprising apertures designed to receive an end portion of the heat pipes (20).

11. System for cooling according to any one of Claims 1 to 10, **characterized in that** the electric drive system comprises a control block (13) comprising apertures designed to receive an end portion of the heat pipes (20).

12. System for cooling according to any one of Claims 1 to 11, **characterized in that** the heat storage tank (14) comprises apertures designed to receive an end portion of the heat pipes.

13. System for cooling according to any one of Claims 1 to 12, **characterized in that** the tank (14) and the liquid circuit (15a) and oil circuit (16a) each comprise a temperature sensor cooperating with the electronic control unit (25).
